# FASCICULE DE BREVET EUROPEEN

(11) **EP 0 530 092 B1**
(45) Date de publication et mention de la délivrance du brevet: **05.06.1996**
(21) Numéro de dépôt: 92402332.8
(22) Date de dépôt: 24.08.1992
(51) Int. Cl.: H04N 5/57

(54) **Dispositif d'asservissement de la tension de blocage d'un tube cathodique par double boucle**
Doppelsperrspannungregelkreis für Kathodenstrahlröhre
Twin blocking voltage control loop for cathode ray tube

(30) Priorité: 30.08.1991 FR 9110801
(43) Date de publication de la demande: 03.03.1993
(73) Titulaire: SEXTANT AVIONIQUE, F-92360 Meudon-la-Forêt (FR)
(72) Inventeur: Sontag, Yves, F-75116 Paris (FR)
(74) Mandataire: Ballot, Paul Denis Jacques

(56) Documents cités:
- WO-A-85/05717
- FR-A- 2 100 454
- US-A- 2 556 455
- US-A- 3 898 381

## Description

L'invention concerne les tubes à rayons cathodiques et, plus particulièrement, un dispositif pour modifier automatiquement la tension de polarisation cathode-wehnelt d'un tube cathodique en fonction de la luminance mesurée sur l'écran du tube.

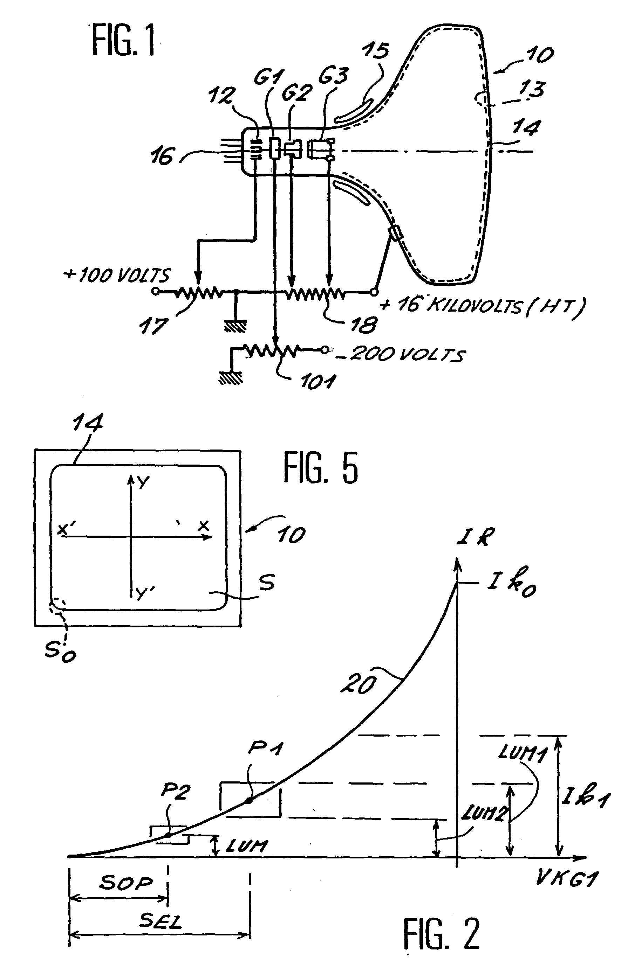

Un tube à rayons cathodiques 10 (figure 1) comprend dans une enceinte sous vide 11 une cathode 12 comportant un filament chauffé 16 qui émet des électrons et une anode 13 qui est portée par l'intermédiaire d'une borne 19 à un potentiel positif élevé (HT) par rapport au potentiel VK de la cathode de manière à attirer les électrons vers une surface 14 qui constitue l'écran du tube cathodique. La paroi interne de l'écran est revêtue de luminophores qui s'illuminent lorsqu'ils reçoivent les électrons émis par la cathode, ce qui permet de faire apparaître des figures lumineuses sur la paroi externe de l'écran en déviant la trajectoire des électrons à l'aide notamment de champs magnétiques variables fournis par des bobines de déviation 15.

Afin de mieux contrôler la trajectoire des électrons et de moduler l'intensité du faisceau d'électrons, les électrons émis par la cathode 12 traversent une structure constituée de trois électrodes ou grilles G1, G2 et G3 qui sont portées à des potentiels appropriés à leur rôle. C'est ainsi que la grille G1, plus connue sous le nom de wehnelt, est disposée à proximité de la cathode et est à un potentiel négatif VG1 par rapport à celle-ci de manière à pouvoir arrêter ou laisser passer les électrons en direction de l'écran. La grille G2, dite d'accélération, est placée à proximité de la grille G1 en direction de l'écran et est à un potentiel positif VG2 par rapport à la cathode. Enfin, la grille G3, dite de focalisation, est placée avant les bobines de déviation 15 et est à un potentiel positif VG3 par rapport à la cathode.

Sur la figure 1, les potentiels des différentes électrodes sont obtenus schématiquement par des potentiomètres 17, 18 et 101. Le potentiomètre 17 est connecté entre une borne à + 100 volts par exemple et une borne reliée à la masse. Le potentiomètre 18 est connecté entre la masse et la haute tension (HT) de 16 kilovolts par exemple. Le potentiomètre 101 est connecté entre la masse et un potentiel de - 200 volts.

La cathode 12 est connectée à la borne de sortie du potentiomètre 17 et son potentiel VK peut donc varier de 0 à + 100 volts. Le wehnelt G1 est connecté à la borne de sortie du potentiomètre 101 et son potentiel VG1 peut donc varier de 0 à - 200 volts. La grille accélératrice G2 est connectée à une première borne de sortie du potentiomètre 18 et son potentiel VG2 peut donc varier de 0 à quelques milliers de volts. La grille de focalisation G3 est connectée à une deuxième borne de sortie du potentiomètre 18 et son potentiel VG3 peut donc atteindre plusieurs milliers de volts.

On comprend que l'on peut moduler l'intensité du faisceau d'électrons et donc celle du point lumineux sur l'écran en modifiant la tension VKG1. A cet effet, la grille G1 est polarisée à une tension Vco, dite de blocage, et une tension de modulation variable lui est appliquée pour obtenir un courant électronique de faisceau variable et donc une luminance variable du point lumineux sur l'écran.

La tension de blocage Vco, plus connue sous le nom de "tension de cut-off", correspond à la différence de potentiels VKG1 juste suffisante pour empêcher le passage des électrons en direction de l'écran.

La figure 2 est un diagramme montrant la variation du courant de cathode Ik, qui correspond sensiblement à la luminance du point sur l'écran, en fonction de la tension VKG1 entre la cathode et la grille G1. La courbe 20, qui est quasi-logarithmique, montre que le courant Ik est nul pour VKG1=Vco et qu'il atteint la valeur Iko pour VKG1=0.

Pour obtenir une caractéristique linéaire entre le signal appliqué à la grille G1 et la luminance sur l'écran, il est nécessaire, d'une part, de linéariser la courbe 20 et, d'autre part, de maintenir le tube cathodique à sa tension de blocage en l'absence d'un signal de modulation, ce maintien étant d'autant plus critique que le tube fonctionne à des valeurs faibles de la luminance, fonctionnement que l'on rencontre lorsque le tube cathodique est utilisé dans un environnement sombre.

Pour garantir la stabilité de la luminance à faible niveau, il est nécessaire :
- de toujours polariser le tube à sa tension de blocage;
- de garder stable la tension VKG2 entre la cathode et la grille accélératrice;
- de garder stable la puissance de chauffage de la cathode, c'est-à-dire de garantir une certaine précision et stabilité de la tension Vf qui est appliquée au filament de chauffage 16;
- de garder stable la différence de potentiels VKA entre la cathode et l'anode.

Pour résoudre ces problèmes, il a été proposé de polariser le tube avec des tensions VKG2, Vf et VKA aussi constantes que possible mais il est difficile de maintenir ces tensions avec une précision supérieure à 1%.

En outre, les caractéristiques du tube, notamment la tension de blocage, évoluent :
- pendant la stabilisation thermo-mécanique du canon à électrons, du démarrage, et
- en cours de vieillissement pendant la durée de vie du tube. Il en résulte que les tensions de polarisation devraient être réajustées au cours du temps.

Pour compenser ces dérives, il a été proposé des dispositifs d'asservissement de la tension de la polarisation cathode-wehnelt sur la tension de blocage du tube d'une part, comme dans le brevet français publié sous le numéro FR-A-2 100 455 par mesure de la luminance de l'écran et émission d'une alarme en cas d'erreur trop importante, et d'autre part, par mesure du courant de cathode. Cet asservissement s'effectue à intervalles réguliers, par exemple pendant le retour trame de l'image, et sa valeur est mémorisée pendant la trame suivante.

L'acquisition de la valeur d'asservissement s'effectue en deux étapes :
- une première étape pour appliquer sur la grille G1 une tension de surblocage (tension supérieure à la tension de blocage) et mesurer les courants de fuites de cathode. Cette mesure est soustraite de la mesure réalisée lors de la deuxième étape et permet de s'affranchir des courants de fuites;
- une deuxième étape pour appliquer sur le tube une faible tension de modulation de valeur connue et asservir le potentiel VKG1 de manière à mesurer un courant de cathode Ik qui est la somme des courants de fuites mesurés au cours de la première étape et d'un courant constant Iks correspondant à la valeur supposée qu'engendrerait la consigne de modulation appliquée. Un tel procédé est satisfaisant lorsque la dynamique de courant de cathode est comprise entre 10 micro-ampères et 2 milliampères ce qui correspond à des courants Iks d'asservissement qui conviennent lorsque l'ambiance lumineuse minimale est une ambiance dite de "salon", ce qui est le cas des téléviseurs grand public.

Lorsque le tube est disposé dans un environnement très sombre et/ou lorsqu'il est très sensible (rendement élevé des luminophores), l'asservissement doit être effectué à des courants de cathode très inférieurs au microampère, ce qui est difficilement réalisable à cause des valeurs des résistances d'isolement et des capacités parasites inter-électrodes.

En outre, ce procédé de l'art antérieur ne tient pas compte de la variation de la sensibilité des luminophores, c'est-à-dire leur rendement lumineux, au cours du temps.

Dans la demande de brevet Européenne déposée le 24.08.92 par la demanderesse sous le titre : "DISPOSITIF D'ASSERVISSEMENT DE LA TENSION DE BLOCAGE D'UN TUBE CATHODIQUE PAR MESURE DE LUMINANCE" (EP-A-0 530 091), publiée le 03.03.93, il est décrit un dispositif,dans lequel l'écran du tube comporte une zone, située à l'extérieur de la surface affectée à l'image opérationnelle, qui est revêtue d'un luminophore émettant de préférence dans le domaine de l'invisible. A cette zone est affectée une cellule photoélectrique qui détecte la luminance d'une surface associée lorsque le faisceau électronique du tube est dirigé vers cette surface par une déviation appropriée. A intervalles réguliers, par exemple pendant le retour de trame, le tube est bloqué (cut-off) et on mesure la luminance de la surface en regard de la cellule et on la compare à une valeur souhaitée; le signal résultant de la comparaison est utilisé pour modifier l'intensité du faisceau électronique, par exemple en modifiant la tension de cathode dans le sens approprié.

Un tel dispositif est satisfaisant mais impose un positionnement précis de la déviation du faisceau électronique et du capteur de luminance pour que la surface du luminophore excité par le faisceau soit toujours en face du capteur quelles que soient les circonstances. En effet, s'il n'en est pas ainsi, le capteur ne détectera aucune luminance et la boucle d'asservissement aura pour effet de diminuer la tension de blocage, ce qui entraînera une augmentation de l'intensité du faisceau électronique jusqu'à la destruction du tube.

Le but de la présente invention est donc de réaliser un dispositif d'asservissement automatique de la tension de blocage d'un tube à rayons cathodiques du type à mesure optique qui évite le mauvais fonctionnement indiqué ci-dessus.

L'invention concerne un dispositif d'asservissement de la tension de polarisation cathode-wehnelt sur la tension de blocage d'un tube à rayons cathodiques dont l'écran présente au moins une première zone opérationnelle du tube utilisée pour faire apparaître les images sur l'écran et une deuxième zone disposée à l'extérieur de la première, ledit dispositif comportant un capteur de luminance qui est disposé face à la deuxième zone pour mesurer la luminance de la surface associée de la deuxième zone, des moyens de balayage pour diriger à chaque retour de trame le faisceau électronique du tube vers ladite deuxième zone associée au capteur et des moyens pour modifier la tension de polarisation cathode-wehnelt du tube, caractérisé en ce que ces derniers moyens comprennent :
- une première boucle d'asservissement en fonction de la valeur du courant de cathode,
- une deuxième boucle d'asservissement en fonction de la valeur de la luminance fournie par ledit capteur de luminance, et
- des moyens de commutation pour passer de la première à la deuxième boucle et vice versa en fonction des valeurs du courant de cathode et de la luminance.

D'autres buts, caractéristiques et avantages de la présente invention apparaîtront à la lecture de la description suivante d'un exemple particulier de réalisation, ladite description étant faite en relation avec les dessins joints dans lesquels:
- la figure 1 est un schéma d'un tube à rayons cathodiques auquel s'applique la présente invention; - la figure 2 est un diagramme montrant la courbe de variation du courant de cathode du tube en fonction de la tension appliquée au wehnelt,
- la figure 3 est un schéma fonctionnel d'un dispositif d'asservissement de la tension de polarisation cathode-wehnelt d'un tube à rayons cathodiques du type à mesure de luminance uniquement tel que décrit dans la demande de brevet précitée,
- les figures 4a, 4b et 4c sont des diagrammes de signaux utilisés dans le dispositif de la figure 3,
- la figure 5 est une vue de face de l'écran 14 montrant une position possible du luminophore pour la mesure de luminance,
- la figure 6 est un schéma fonctionnel d'un dispositif d'asservissement de la tension de polarisation cathode-wehnelt d'un tube à rayons cathodiques selon l'invention, et
- les figures 7a à 7d sont des diagrammes des différents signaux de commande du dispositif de la figure 6.

L'invention consiste à mettre en oeuvre deux boucles d'asservissement, l'une utilisant une mesure du courant de cathode Ik et l'autre utilisant, comme dans la demande de brevet précitée, une mesure de la luminance d'une zone de l'écran du tube revêtue d'un luminophore ayant des caractéristiques particulières.

L'asservissement sur la mesure de luminance permettra d'obtenir une bonne précision. L'information fournie par la mesure du courant Ik permettra de vérifier la validité de la mesure de luminance. Au démarrage ou en cas de panne de la chaîne de mesure de luminance, l'asservissement s'effectue sur la mesure du courant Ik.

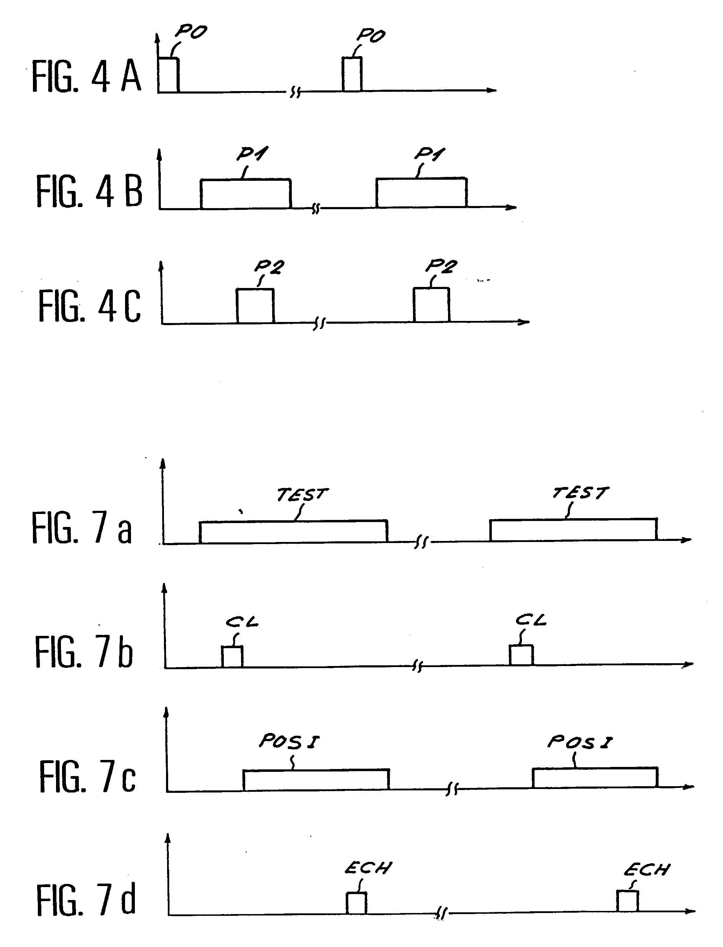

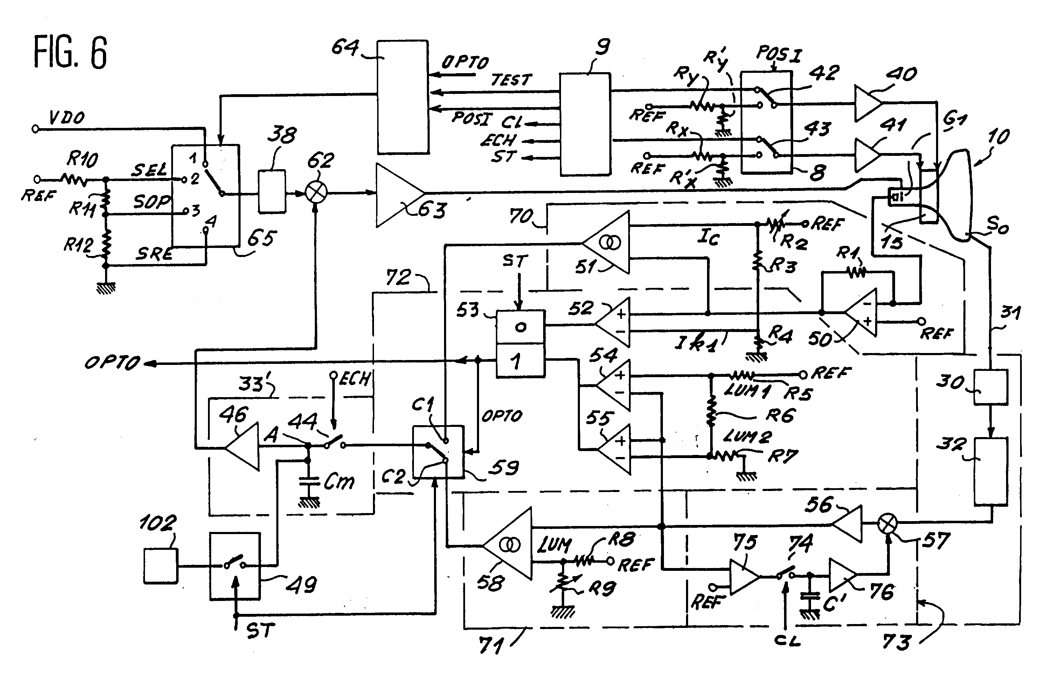

Avant de décrire l'invention en relation avec les figures 6 et 7, on décrira un dispositif d'asservissement mettant en oeuvre uniquement une boucle de mesure de luminance selon la demande de brevet précitée.

Cette boucle a pour but de modifier le courant de cathode Ik en fonction de la mesure de la luminance d'un point de l'écran situé en dehors de la partie habituellement utilisée; de préférence, ce point de l'écran est réalisé avec un luminophore ayant des caractéristiques particulières.

A cet effet, l'écran 14 comporte (figure 5), en plus d'une surface utile S réalisée avec les luminophores habituels, une zone Sₒ réalisée avec un luminophore Lo ayant des caractéristiques adaptées à son rôle dans le dispositif selon l'invention. Cette zone Sₒ est située à la périphérie de l'écran et n'est normalement pas balayée par le faisceau électronique émis par la cathode pour réaliser une image opérationnelle.

Le luminophore Lo de la zone Sₒ est choisi selon les critères suivants:
- sa longueur d'onde doit être telle que tout rayonnement parasite visible vers la surface opérationnelle du tube est évité; de préférence, elle sera dans le domaine de l'infrarouge;
- son temps de montée à 99% doit être aussi court que possible pour que la durée de la phase de mesure de la luminance soit la plus courte possible; un temps de montée de l'ordre de 10 microsecondes est acceptable dans le cas d'une mesure pendant le retour de trame;
- son rendement énergétique doit être le plus élevé possible de manière à asservir le système au plus près de la tension de blocage.
On remarquera que le temps de montée à 99% du luminophore de la zone opérationnelle S est en général de l'ordre de quelques millisecondes, qui est à comparer avec le temps de montée de quelques microsecondes du luminophore Lo de la zone Sₒ. Il est recommandé que le temps de montée du luminophore Lₒ soit de préférence très inférieur à celui du luminophore de la zone S, d'au moins un ordre de grandeur (rapport 10) jusqu'à plusieurs ordres de grandeur dans l'exemple décrit ci-dessus (rapport 1000).

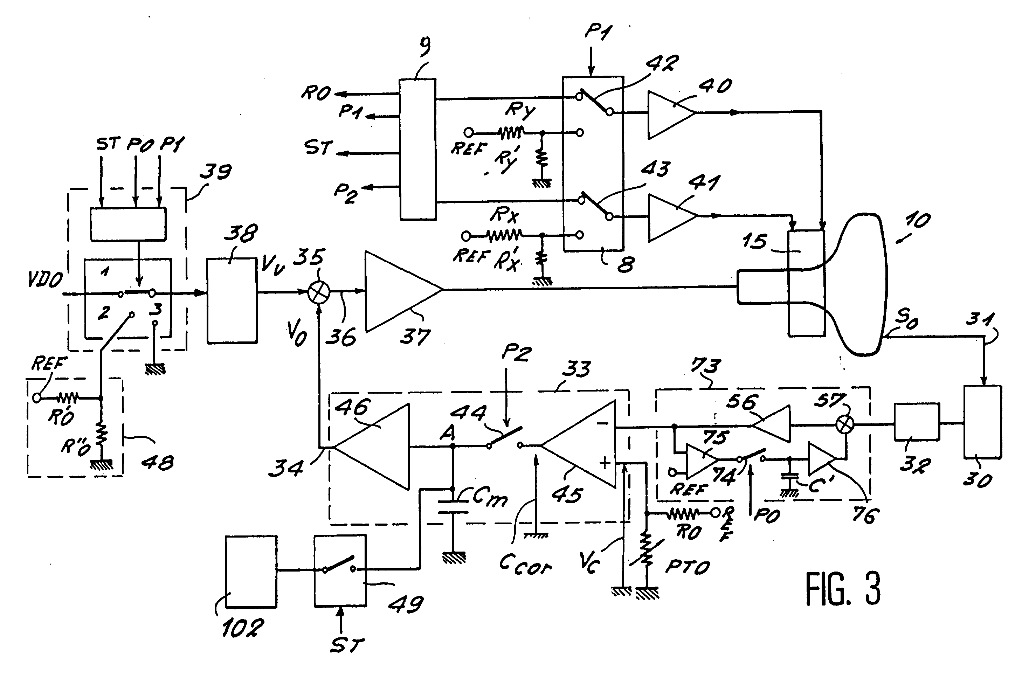

A cette zone Sₒ est associé un capteur photoélectrique 30, du type diode photoconductrice ou similaire, qui fournit un signal électrique représentatif de la luminance d'un point de la zone Sₒ. Bien entendu, le capteur 30 peut être à proximité immédiate de la zone Sₒ ou en être éloigné et, dans ce cas, lui être relié par une fibre optique 31 comme le montre la figure 3.

Le capteur de luminance 30 doit présenter les caractéristiques suivantes:
- sa sensibilité doit être maximale pour la longueur d'onde du luminophore;
- sa surface doit être suffisamment grande pour augmenter l'énergie reçue et faciliter le problème de son positionnement;
- sa capacité parasite doit être suffisamment faible pour que la bande passante du système de détection permette d'effectuer la mesure rapidement. Le signal électrique fourni par le capteur 30 est appliqué à un préamplificateur 32 dont le signal de sortie est appliqué à un circuit 73 qui élimine du signal la composante due au courant d'obscurité du capteur 30.

A cet effet, le circuit 73 échantillonne la valeur du courant d'obscurité pendant la phase PO (figure 4a) et cette valeur échantillonnée est mémorisée pendant le reste du temps pour être déduite du signal venant du préamplificateur 32.

Le circuit 73 peut être réalisé de différentes manières et, notamment selon le schéma indiqué à l'intérieur du rectangle 73. Il comprend un amplificateur 56 dont la boucle de contre-réaction est constituée d'un circuit échantillonneur-bloqueur et d'un circuit soustracteur 57. Le circuit échantillonneur-bloqueur comprend un premier amplificateur 75 dont une borne d'entrée est connectée à la borne de sortie de l'amplificateur 56 et dont l'autre borne d'entrée est connectée à une source de tension de référence REF. La borne de sortie de ce premier amplificateur est connectée à une borne d'un condensateur mémoire C′ par l'intermédiaire d'un interrupteur 74, l'autre borne étant connectée à la masse. Un amplificateur 76 connecte le condensateur C′ au circuit soustracteur 57. L'ouverture et la fermeture de l'interrupteur 74 sont commandées par le signal de phase PO (figure 4a).

Le signal de sortie du circuit 73 est appliqué à un échantillonneur-bloqueur 33 pour être comparé, dans un comparateur amplificateur d'erreur 45, à une consigne de luminance Vc qui est ajustée à l'aide d'un diviseur de tension résistif connecté entre une source de tension REF et la masse et comportant une résistance RO et un potentiomètre PTO. Cet échantillonneur-bloqueur 33 comprend, notamment, le comparateur amplificateur d'erreur 45 qui effectue cette comparaison et fournit sur sa borne de sortie, une tension de correction Vcor qui permettra, comme on le décrira plus loin, d'augmenter ou de diminuer la tension de polarisation cathode-wehnelt du tube pendant la phase P2 d'échantillonnage (figure 4c).

Par la fermeture d'un interrupteur 44 pendant cette phase P2, cette tension de correction Vcor est mémorisée dans un condensateur Cm pendant tout le reste du temps où l'interrupteur 44 reste ouvert.

L'étage de sortie de l'échantillonneur-bloqueur 33 est constitué par un amplificateur 46 dont la borne de sortie 34 est à une tension Vₒ qui est égale à la tension de charge du condensateur Cm en un point A (borne A).

La tension Vₒ est soustraite d'une tension Vv correspondant à un signal vidéo VDO dans un circuit soustracteur 35 dont la borne de sortie 36 est connectée à la cathode du tube cathodique 10 par l'intermédiaire d'un amplificateur 37.

Le signal vidéo VDO est appliqué au circuit soustracteur 35 par l'intermédiaire d'un circuit correcteur 38, plus connu sous le nom de circuit correcteur de gamma, qui a pour effet de linéariser la luminance de l'écran en fonction du signal de commande de luminance constitué par le signal vidéo.

En outre, le signal vidéo n'est pas appliqué en permanence au circuit correcteur de gamma par suite de l'interposition d'un commutateur à trois positions 39 qui permet de connecter le correcteur de gamma 38 et, par suite, le circuit soustracteur 35 :
- soit au signal vidéo VDO en fonctionnement normal (position 1),
- soit à la masse (position 3), soit à un circuit de référence 48 (position 2) pendant les phases d'asservissement.

Ce circuit de référence 48 comprend un diviseur de tension résistif comportant des résistances R′0 et R˝0, la résistance R′0 étant connectée à la tension de référence REF et la résistance R˝0 étant connectée à la masse.

La commutation du commutateur 39 à la masse est obtenue par le signal de phase PO (figure 4a) ou par un signal ST lors de la mise sous tension du tube à rayons cathodiques.

La commutation du commutateur 39 vers la borne de sortie du circuit de référence 48 est obtenue par un signal de phase P1 (figure 4b). Les signaux de phase PO et P1 sont cycliques et peuvent être, par exemple, synchronisés sur les signaux de balayage. Le signal PO précède le signal P1 sans recouvrement.

Au tube 10 et plus spécialement aux bobines de déviation 15 sont associés de manière connue des amplificateurs de déviation, l'un référencé 40 pour le balayage suivant l'axe des abscisses X′X (figure 5) et l'autre 41 pour le balayage suivant l'axe des ordonnées Y′Y. Ces amplificateurs 40 et 41 reçoivent d'un circuit de balayage 9, des signaux de balayage du type télévision ou cavalier mais reçoivent, en outre, selon l'invention, des signaux de positionnement du faisceau électronique pendant la durée du signal de phase P1 pour diriger ledit faisceau vers la zone Sₒ de l'écran et, plus précisément, en face de l'extrémité de la fibre optique 31.

A cet effet, la borne d'entrée de chaque amplificateur de déviation 40 et 41 est connectée respectivement à un commutateur 42 et 43 d'un circuit de commutation 8, commandé par le signal P1, de manière à recevoir les signaux de balayage pendant la durée de la trame ou du tracé cavalier et à recevoir des signaux de référence pendant le retour de trame ou du temps prévu pour le test pendant le tracé cavalier, c'est-à-dire pendant la durée du signal P1. Sur la figure 3, ces signaux de référence sont matérialisés par un circuit diviseur résistif alimenté par une tension de référence REF et comportant les résistances Rx et R′x pour la déviation X′X et les résistances Ry et R′y pour la déviation Y′Y.

La mesure de la luminance de la zone Sₒ de l'écran est effectuée par l'échantillonneur-bloqueur 33 pendant une partie de la durée du signal P1. A cet effet, l'échantillonneur-bloqueur 33 est commandé par un signal P2 (figure 4c) qui apparaît pendant P1. Comme le montre la figure 3, ce signal P2 commande la charge du condensateur Cm par l'intermédiaire de l'interrupteur 44 disposé entre le comparateur 45 et la borne A du condensateur Cm dont l'autre borne est connectée à la masse. La tension de charge du condensateur Cm est appliquée au soustracteur 35 comme décrit ci-dessus.

Par ailleurs, la borne A du condensateur Cm est connectée à une source 102 par un interrupteur 48 commandé par un signal ST de manière à charger le condensateur Cm à une tension déterminée à la mise sous tension du tube 12 et à obtenir un blocage maximum du tube.

Le signal ST ainsi que les signaux PO, P1 et P2 sont fournis par le circuit de balayage 9.

Pour faire varier le seuil de luminance, le signal fourni par le capteur 30 est comparé comme décrit précédemment à une valeur de consigne Vc dans l'amplificateur d'erreur 45; cette valeur de consigne est obtenue par un circuit diviseur résistif connecté entre la tension de référence REF et la masse et comportant la résistance RO et le potentiomètre PTO. Cette valeur Vc est ajustable par l'utilisateur pour adapter la luminance de fond de l'écran.

Le fonctionnement du tube est alors le suivant en supposant que le tube est en fonctionnement normal. Cycliquement, par exemple à chaque retour de trame, le signal PO bascule le commutateur 39 à la masse et permet au circuit 73 d'échantillonner le courant d'obscurité du capteur 30 pendant que le courant de faisceau est quasi nul et que le faisceau n'est pas positionné sur la zone S_{O}, c'est-à-dire sur le capteur 30. Le circuit 73 retranchera cette valeur à la mesure d'asservissement qui sera faite par la suite.

Ensuite, le signal P1, commande les commutateurs 42 et 43 pour que le faisceau électronique excite le point de la zone S_{O} situé en face de l'extrémité de la fibre 31; il commande également le commutateur 39 pour que le soustracteur 35 soit connecté, à travers le correcteur de gamma 38 à la source 48 de tension de référence (position 2).

Si la luminance, qui est mesurée par le capteur 30, est supérieure à la valeur de consigne Vc, le condensateur Cm se décharge, par exemple, pendant la durée du signal P2 et la tension du point A diminue; ceci a pour effet, par l'intermédiaire de l'amplificateur 46 et du soustracteur 35 de diminuer le courant de cathode Ik et donc d'augmenter la différence de potentiels VKG1, ce qui a pour effet de diminuer le courant électronique du tube et donc la luminance du tube.

On comprend que l'effet inverse est obtenu lorsque la luminance mesurée par le capteur 30 est inférieure à la valeur de consigne Vc.

Lors de la mise sous tension du tube, il est important que le tube soit bloqué au maximum et il en résulte que, selon le fonctionnement décrit ci-dessus, la tension du point A doit être minimale : c'est le rôle de la source 102 qui peut être nulle ou négative et qui, à la mise sous tension, est connectée au point A par la fermeture de l'interrupteur 49 grâce au signal ST. Pour la même raison, le signal ST commande également le commutateur 39 pour connecter le correcteur de gamma 38 à la masse (position 3).

Le dispositif de la figure 3 présente l'inconvénient majeur de conduire à la destruction du tube en cas de mauvais fonctionnement des systèmes de balayage ou d'un élément de la boucle tel que le capteur. Aussi, la présente invention prévoit, d'une part, de perfectionner cette boucle de type optique et de la combiner avec une deuxième boucle utilisant le courant de cathode.

Ainsi, toute anomalie grave dans la chaîne de mesure optique ou toute erreur importante de positionnement du spot sera détectée. Le dispositif délivre un signal indiquant la présence d'une anomalie.

Sur la figure 6, les éléments identiques à ceux de la figure 3 portent les mêmes références et ne seront pas décrits à nouveau.

Dans le dispositif selon l'invention, la modification de la tension de polarisation cathode-wehnelt du tube est obtenue en modifiant le potentiel VG1 du wehnelt soit par suite d'une mesure du courant de cathode Ik effectuée par un circuit 70, soit par suite d'une mesure de la luminance de l'écran effectuée par un circuit 71, la sélection étant réalisée par un circuit de commutation 72.

Le circuit 70 comprend un amplificateur opérationnel 50 dont la borne d'entrée négative est connectée à la cathode du tube et dont la borne d'entrée positive est connectée à la source REF de tension de référence. Une résistance de contre-réaction R1 est connectée entre la borne d'entrée négative et la borne de sortie de cet amplificateur. La borne de sortie de l'amplificateur 50 est connectée, d'une part, à une première borne d'entrée d'un amplificateur 51 du type générateur de courant et, d'autre part, à une borne d'entrée positive d'un comparateur 52 du circuit de commutation 72. L'autre borne d'entrée du générateur de courant 51 est connectée au point commun de résistances R2 et R3 d'un circuit diviseur de tension dont la résistance R2 est connectée à la source REF de tension de référence. La borne d'entrée négative du comparateur 52 est connectée au point commun des résistances R3 et R4 du circuit diviseur de tension indiqué ci-dessus, la résistance R4 étant connectée à la masse. Ce circuit diviseur de tension fournit en fait deux tensions de seuil, l'une correspondant à une valeur Ic , dite de consigne, du courant de cathode qui est appliquée au générateur de courant 51 et l'autre correspondant à une valeur de seuil Ik1 du courant de cathode qui est appliquée au comparateur 52.

Le circuit 71 comprend, outre les éléments communs au schéma de la figure 3, c'est-à-dire le capteur de luminance 30, la fibre optique 31 et le préamplificateur 32, un circuit de restauration de la composante continue 73 auquel est appliqué le signal de sortie du préamplificateur 32 et dont la borne de sortie est connectée, d'une part, à des comparateurs 54 et 55 et, d'autre part, à un générateur de courant 58.

Le circuit de restauration de la composante continue 73 peut être réalisé de différentes manières et, notamment, selon le schéma indiqué à l'intérieur du rectangle 73. Il comprend comme indiqué ci-dessus en relation avec la figure 3 un amplificateur 56 dont la boucle de contre-réaction est constituée d'un circuit échantillonneur-bloqueur et d'un circuit soustracteur 57. Le circuit échantillonneur-bloqueur comprend un premier amplificateur 75 dont une borne d'entrée est connectée à la borne de sortie de l'amplificateur 56 et dont l'autre borne d'entrée est connectée à la source de tension de référence REF. La borne de sortie de ce premier amplificateur est connectée à une borne d'un condensateur mémoire C′ par l'intermédiaire d'un interrupteur 74, l'autre borne étant connectée à la masse. Un amplificateur 76 connecte le condensateur C′ au circuit soustracteur 57. L'ouverture et la fermeture de l'interrupteur 74 sont commandées par un signal CL qui sera défini ci-après et qui est différent du signal PO de la figure 3).

Le circuit de restauration de la composante continue 73 a pour but de tenir compte du courant d'obscurité du capteur 30 lors de la mesure de la luminance en mesurant ce courant par la fermeture de l'interrupteur 74, en gardant en mémoire cette valeur de courant d'obscurité dans le condensateur C′ pour la soustraire, dans le circuit 57, au courant du capteur mesuré en présence d'un faisceau électronique. Un tel circuit permet de mesurer des valeurs très faibles de courant de luminance par rapport au courant d'obscurité du capteur.

La deuxième borne d'entrée du générateur de courant 58 est connectée au point commun de résistances R8 et R9 (variable) d'un circuit diviseur de tension dont la résistance R8 est connectée à la source de tension REF. Ce circuit diviseur permet de régler le seuil de luminance LUM du dispositif de l'invention et de faire en sorte que l'amplificateur 58 fournit un signal proportionnel lorsque le signal de sortie de l'amplificateur 56 est supérieure à ce seuil de luminance LUM.

Le comparateur 54 comporte une borne négative qui est connectée à la borne de sortie de l'amplificateur 56 et une borne positive qui est connectée au point commun de résistances R5 et R6 d'un circuit diviseur de tension dont la résistance R5 est connectée à la source REF tandis que la résistance R6 est connectée à la masse par l'intermédiaire d'une résistance R7.

Le comparateur 55 comporte une borne positive qui est connectée à la borne de sortie de l'amplificateur 56 et une borne négative qui est connectée au point commun des résistances R6 et R7. Le circuit diviseur donne donc deux tensions de comparaison qui correspondent chacune à un seuil de luminance, LUM1 pour le comparateur 54 et à un seuil de luminance LUM2 pour le comparateur 55, l'étagement des seuils étant tels que LUM1 est supérieur à LUM2 (figure 2).

Le circuit de sélection 72 comprend outre les comparateurs 52, 54, et 55, un commutateur 59 à deux positions et un circuit bistable 53 qui commande la mise en place du commutateur dans l'une des deux positions C1 ou C2. La borne d'entrée C1 du commutateur 59 est connectée à la borne de sortie du générateur de courant 51 tandis que l'autre borne d'entrée C2 est connectée à la borne de sortie du générateur de courant 58. Le circuit bistable 53 est mis à l'état 0 par le signal de sortie du comparateur 52 lorsque le courant de cathode Ik est supérieur à Ik1 et cet état met le commutateur 59 dans la position C1. Le circuit bistable 53 est mis à l'état 1 par les signaux de sortie des comparateurs 54 et 55 lorsque le signal de luminance est compris dans l'intervalle défini par LUM1 et LUM2 et cet état met le commutateur 59 dans la position C2.

La borne de sortie du commutateur 59 est connectée au dispositif d'échantillonnage 33′ qui est similaire au dispositif 33 décrit en relation avec la figure 3 et qui comporte donc l'amplificateur 46 dont la borne d'entrée est connectée à la borne de sortie du commutateur 59 par l'intermédiaire de l'interrupteur 44. La borne de sortie de l'amplificateur 46 est connectée au wehnelt par l'intermédiaire d'un amplificateur 63 dit amplificateur de wehnelt précédé d'un circuit soustracteur 62 qui reçoit, par ailleurs, des signaux électriques qui sont différents selon l'état de fonctionnement du dispositif. Ces signaux électriques sont appliqués par l'intermédiaire d'un commutateur 65 qui est commandé par les signaux fournis par un circuit logique 64.

Les signaux qui sont commutés sont les suivants :
- le signal vidéo VDO (position 1) qui est normalement appliqué au tube pour faire apparaître l'image correspondante;
- un premier signal de référence SEL (position 2) dit de stimulation électrique qui correspond à la valeur de consigne Ic du courant de cathode appliquée à l'entrée du générateur de courant 51;
- un deuxième signal de référence SOP (position 3) dit de stimulation optique qui correspond à la valeur de consigne LUM de la luminance appliquée à l'entrée du générateur de courant 58;
- un troisième signal de référence SRE (position 4) dit de restauration de composante continue qui correspond à une valeur nulle du signal vidéo, c'est-à-dire le potentiel de la masse.

Le circuit logique 64 fournit les signaux de commande du commutateur 65 à partir des signaux suivants :
- un signal logique référencé TEST (figure 7a) dont la valeur 0 indique que le tube reçoit le signal vidéo, la valeur 1 correspondant alors à l'intervalle qui est réservé au réglage périodique du dispositif d'asservissement selon l'invention; ce signal TEST a, par exemple, la périodicité du signal de trame et une durée de 200 microsecondes et est fourni par le circuit de balayage 9;
- un signal logique référencé POSI (figure 7c) dont la valeur 1 indique que le faisceau électronique est dévié vers la zone Sₒ de manière à pouvoir effectuer une mesure de luminance; ce signal est également fourni par le circuit de balayage 9 pendant la durée du signal TEST;
- un signal logique référencé OPTO qui est fourni par le circuit bistable 53 dont la valeur 1 correspond à l'état 1 du circuit bistable 53, valeur 1 qui indique que le dispositif d'asservissement fonctionne dans la zone d'asservissement optique (position C2).

Le circuit de balayage 9 fournit en outre les signaux suivants :
- un signal logique CL dont la valeur 1 (figure 7b) correspond à l'opération de restitution de composante continue; ce signal apparaît au début du signal TEST et se termine avant l'apparition du signal POSI défini ci-dessus et a pour effet de fermer l'interrupteur 74 du circuit 73;
- un signal ECH (figure 7d) à la fin du signal POSI pour fermer l'interrupteur 44 du circuit d'échantillonnage 33′ de manière à prendre en compte la mesure de luminance;
- un signal ST qui sert à l'initialisation et qui est utilisé pour mettre le circuit bistable 53 à l'état 0, ce qui correspond à un asservissement sur le courant de cathode, et à décharger le condensateur Cm du dispositif d'échantillonnage 33′ de manière que le potentiel du wehnelt soit le plus négatif possible par rapport à celui de la cathode.

Le fonctionnement du dispositif de l'invention est alors le suivant en régime permanent établi sachant que le commutateur 59 est dans la position C2 qui connecte le générateur de courant 58 au circuit d'échantillonnage 33′.

A intervalles réguliers, par exemple à chaque retour de trame, le signal TEST déconnecte le signal vidéo VDO qui n'est alors plus appliqué au wehnelt du tube: ce dernier ne sera excité que par un des signaux SEL, SOP ou SRE selon la position du commutateur 65.

Le signal CL ferme l'interrupteur 74 et permet ainsi de réaliser une mesure du courant d'obscurité du tube et du capteur qui est mémorisée par le condensateur C′ après l'ouverture de l'interrupteur 74. Le courant d'obscurité du tube est défini en appliquant le signal SRE par la position 4 du commutateur: c'est-à-dire le potentiel de la masse.

Le signal POSI qui suit commande les commutateurs 42 et 43 de manière à dévier le faisceau électronique vers la zone Sₒ de la fibre optique 31; par ailleurs, en combinaison avec le signal OPTO, il met le commutateur 65 en position 3 de manière à appliquer un signal SOP au wehnelt, signal qui correspond à la valeur de consigne de luminance LUM à l'entrée du générateur de courant 58. Le signal détecté par le capteur 30 est comparé au signal mémorisé dans le condensateur C′ de sorte que le signal de sortie du circuit de restauration de la composante continue 73 représente la luminance due au faisceau électronique modulé par le signal SOP. Selon que ce signal est supérieur ou inférieur à la valeur de consigne LUM, il modifie le potentiel du wehnelt dans le sens requis pour ramener le signal détecté vers la valeur de consigne LUM. Cette modification est obtenue par la chaîne comprenant le générateur 58, la position C2 du commutateur 59, le circuit d'échantillonnage 33′, le circuit soustracteur 62 et l'amplificateur 63.

En cas de mauvais fonctionnement de la chaîne optique, par exemple une défaillance du capteur ou un mauvais positionnement de l'impact du faisceau électronique par rapport à la fibre optique, le signal de sortie du circuit 71 serait erroné de sorte que le potentiel du wehnelt deviendrait plus positif à chaque mesure et conduirait à la destruction du tube. Pour éviter cela, dès que le courant de cathode dépasse le seuil Ik1, le signal de sortie du comparateur 52 met le circuit bistable 53 à l'état 0, ce qui met le commutateur 59 dans la position C1 de sorte que l'asservissement est obtenu par la mesure du courant de cathode avec une valeur de consigne Ic.

Dans le cas de l'asservissement par le courant de cathode, le commutateur 65 est mis en position 2 de sorte que le signal SEL est appliqué au circuit soustracteur 62 lors de la mesure du courant d'obscurité.

La consigne SEL est très supérieure à la consigne SOP car la mesure sur le courant de cathode est très grossière.

Le système peut revenir à l'asservissement par mesure optique si le signal de sortie du circuit 73 reste entre les seuils LUM1 et LUM2, auquel cas le circuit bistable 53 passe à l'état 1 et met en position C2 le commutateur 65 est mis en position 3 de sorte que le signal SOP est utilisé lors de la mesure du courant d'obscurité.

Lors de la mise sous tension du tube, le signal ST court-circuite le condensateur Cm, ce qui a pour conséquence de déterminer une tension de wehnelt très négative par rapport à la cathode correspondant à un surblocage du tube. Le signal ST met le circuit bistable 53 à l'état 0, ce qui met en position C1 le commutateur 59 de sorte que l'asservissement s'effectue par la mesure du courant de cathode. Le point de fonctionnement vient en P1 (figure 2) d'abord puis en P2 après basculement du circuit bistable 53 par l'effet des seuils LUM1 et LUM2.

Si une anomalie provoquait la rupture de la chaîne de mesure (erreur d'amplificateur de balayage, dérive exagérée de la haute tension, panne du capteur optique), l'information issue de celle-ci serait trop petite par rapport à la consigne et l'asservissement tendrait à augmenter Ik.

A partir du moment où Ik atteindrait le seuil IK1, la bascule commuterait l'asservissement sur la mesure du courant de cathode. Comme la chaîne de mesure de luminance serait rompue, l'information lue serait quasi-certainement inférieure au seuil LUM1 et la bascule resterait dans cette position, indiquant ainsi au système la présence de l'anomalie.

Dans le cas très improbable où l'information serait comprise entre LUM1 et LUM2, il y aurait une commutation cyclique de la bascule.

L'invention a été décrite dans le cas où l'écran présente deux luminophores différents mais elle s'applique au cas où il n'y a qu'un seul luminophore, celui correspondant à la partie opérationnelle, mais on ne bénéficie pas alors de l'avantage apportée par les caractéristiques du deuxième luminophore Lo, notamment une meilleure sensibilité.

## Revendications

1. Dispositif d'asservissement de la tension de polarisation cathode-wehnelt sur la tension de blocage d'un tube à rayons cathodiques (10) dont l'écran (14) présente au moins une première zone opérationnelle (S) du tube utilisée pour faire apparaître les images sur l'écran et une deuxième zone (So) disposée à l'extérieur de la première, ledit dispositif comportant un capteur de luminance (30, 31) qui est disposé face à la deuxième zone (Sₒ) pour mesurer la luminance de la surface associée de la deuxième zone, des moyens de balayage pour diriger à chaque retour de trame le faisceau électronique du tube vers ladite deuxième zone associée au capteur et des moyens (33', 63) pour modifier la tension de polarisation cathode-wehnelt du tube, caractérisé en ce que lesdits moyens pour modifier comprennent, en outre,
- une première boucle d'asservissement (70) en fonction de la valeur du courant de cathode,
- une deuxième boucle d'asservissement (71) en fonction de la valeur de la luminance fournie par ledit capteur de luminance, et
- des moyens de commutation (72) pour passer de la première à la deuxième boucle et vice versa en fonction des valeurs du courant de cathode et de la luminance.

2. Dispositif selon la revendication 1, caractérisé en ce que les moyens de commutation comprennent :
- un commutateur (59) à deux positions dont une première borne d'entrée (C1) est connectée à la borne sortie de la première boucle d'asservissement (70) et dont la deuxième borne d'entrée (C2) est connectée à la borne de la sortie de la deuxième boucle d'asservissement (71), et
- un circuit de commande dudit commutateur (59) comprenant un circuit bistable (53) dont l'état 1 ou 0 est déterminé par des signaux de sortie de comparateurs (52, 54, 55) auxquels sont appliqués, d'une part, les signaux représentatifs des valeurs de courant de cathode et de luminance et, d'autre part, des valeurs de seuil prédéterminés (Ic, Ik1, LUM1, LUM2).

3. Dispositif selon la revendication 1 ou 2, caractérisé en ce que le signal fourni par l'une des boucles d'asservissement est appliqué au wehnelt du tube par l'intermédiaire d'un circuit soustracteur (62) auquel est appliqué le signal vidéo (VDO).

4. Dispositif selon la revendication 3, caractérisé en ce que des moyens sont prévus pour appliquer au circuit soustracteur des signaux de polarisation de valeur prédéterminée (SEL, SOP, SRE) aux lieu et place du signal vidéo (VDO).

5. Dispositif selon la revendication 4, caractérisé en ce que les moyens d'application desdits signaux de polarisation comprennent :
- un circuit diviseur de tension résistif (R10, R11, R12)
- un circuit de commutation (65) dont les bornes d'entrée (1, 2, 3, 4) sont connectées audit circuit diviseur de tension résistif et à un circuit fournissant le signal vidéo (VDO) et dont la borne de sortie est connectée à une des bornes d'entrée du circuit soustracteur (62),
- un circuit logique de commande (64) dudit circuit de commutation.

6. Dispositif selon la revendication 2, 3, 4 ou 5, caractérisé en ce que le circuit bistable (53) est également commandé par un signal d'initialisation (ST) de manière à positionner ledit circuit bistable (53) dans un état (état 0) tel que la première boucle d'asservissement (70) sur le courant de cathode (Ik) soit en fonctionnement.

7. Dispositif selon l'une quelconque des revendications précédentes 2 à 6, caractérisé en ce que le circuit bistable (53) est commandé par les signaux de sortie des comparateurs (54, 55) recevant des tensions de seuil (LUM1, LUM2) de manière à positionner ledit circuit bistable (53) dans un état (état 1) tel que la deuxième boucle d'asservissement (71) fonctionne sur la mesure de luminance lorsque ladite mesure est comprise entre lesdites tensions de seuil.

8. Dispositif selon l'une quelconque des revendication précédentes 2 à 7, caractérisé en ce que le circuit bistable (53) est commandé par le signal de sortie d'un troisième comparateur (52) recevant une tension de seuil (Ik1) de manière à positionner ledit circuit bistable (53) dans un état (état 0) tel que la première boucle d'asservissement (70) fonctionne sur la mesure du courant de cathode (Ik) lorsque ledit courant (Ik) dépasse le seuil (Ik1).

## Claims

1. Device for controlling the polarisation voltage for a cathode control grid across the blocking voltage of a cathode ray tube (10), whose screen has at least a first operating zone (S) of the tube used to make images appear on the screen, and a second zone (Sₒ) disposed outside the first, the said device having a luminance sensor (30, 31) arranged facing the second zone (Sₒ) to measure the luminance of the surface assigned to the second zone (Sₒ), sweeping means (8, 9) for directing the electronic beam of the tube towards the said second zone assigned to the sensor on each return frame and means (33', 63) for modifying the polarisation voltage of the cathode control grid tube, characterised in that the said modifying means have in addition,
- a first servoloop (71) operating as a function of the cathode current.
- a second servoloop (71) operating as a function of the luminance supplied by the said luminance sensor, and
- switching means (72) to switch from the first to the second loop and vice versa depending on the cathode current and luminance values.

2. Device as claimed in claim 1, characterised in that the switching means comprise:
- a dual-position switch (59), of which one input terminal (C1) is connected to the output terminal of the first servoloop (70) and whose second input terminal (C2) is connected to the output terminal of the second servoloop (71), and
- a control circuit for the said switch (59) having a bistable circuit (53) whose state 1 or 0 is determined by the output signals of the comparators (52, 54, 55) to which the signals representing the cathode current and luminance values are applied on the one hand and predetermined threshold values (Ic, Ik1, LUM1, LUM2) on the other.

3. Device as claimed in claim 1 or 2, characterised in that the signal supplied by one of the servoloops is applied to the control grid of the tube via a subtractor circuit (62) to which the video signal (VDO) is applied.

4. Device as claimed in claim 3, characterised in that means are provided to apply polarisation signals of predetermined value (SEL, SOP, SRE) to the subtractor circuit instead of and in place of the video signal (VDO).

5. Device as claimed in claim 4, characterised in that the means for applying the said polarisation signals comprise:
- a resistive voltage divider circuit (R10, R11, R12)
- a switching circuit (65) whose input terminals (1, 2, 3, 4) are connected to the said resistive voltage divider circuit and to a circuit supplying the video signal (VDO) and whose output terminal is connected to one of the input terminals of the subtractor circuit (62),
- a logic control circuit (64) for the said switching circuit.

6. Device as claimed in claim 2, 3, 4 or 5, characterised in that the bistable circuit (53) is also controlled by an initialisation signal (ST) so as to place the said bistable circuit (53) in a state (state 0) in which the first servoloop (70) across the cathode current (Ik) is in operating mode.

7. Device as claimed in any one of the previous claims 2 to 6, characterised in that the bistable circuit (53) is controlled by the output signals of comparators (54, 55) receiving threshold voltages (LUM1, LUM2) so as to place the bistable circuit (53) in a state (1) in which the second servoloop (71) operates on the luminance measurement when the said measurement falls within the range of the said threshold voltages.

8. Device as claimed in any one of the previous claims 2 to 7, characterised in that the bistable circuit (53) is controlled by the output signal from a third comparator (52) receiving a threshold voltage (Ik1) so as to place the said bistable circuit (53) into a state (state 0) in which the first servoloop (7) operates on the cathode current measurement (Ik) when the said current (Ik) exceeds the threshold (Ik1).

## Patentansprüche

1. Vorrichtung zur Regelung der Wehnelt-Kathoden-Polarisationsspannung in bezug auf die Sperrspannung einer Kathodenstrahlröhre (10), deren Bildschirm (14) wenigstens einen ersten Wirkungsbereich (S) für die verwendete Röhre aufweist, um die Bilder auf dem Bildschirm darzustellen und einen zweiten Bereich (Sₒ) aufweist, der außerhalb des ersten angeordnet ist, wobei die Vorrichtung einen Luminanzsensor (30, 31) aufweist, der gegenüber dem zweiten Bereich (Sₒ) angeordnet ist, um die Luminanz der zugehörigen Fläche des zweiten Bereichs zu messen, eine Ablenkanordnung aufweist, um bei jeder Halbbildwiederkehr den Elektronenstrahl der Röhre zum zweiten dem Sensor zugeordneten Bereich abzulenken und einer Anordnung (33', 63) aufweist zur Veränderung der Kathoden-Wehnelt-Polarisations-spannung der Röhre, dadurch gekennzeichnet, daß die Anordnung zur Veränderung außerdem aufweist:
- eine erste Regelschleife (70) als Funktion des Wertes des Stromes der Kathode,
- eine zweite Regelschleife (71) als Funktion des Wertes der Luminanz der vom Luminanzsensor stammt, und
- eine Anordnung zur Umschaltung (72), um von der ersten zur zweiten Schleife und umgekehrt umzuschalten als Funktion der Werte des Stromes der Kathode und der Luminanz.

2. Vorrichtung nach Anspruch 1, dadurch gekennzeichnet, daß die Anordnung zur Umschaltung aufweist:
- einen Umschalter (59) mit zwei Stellungen, wobei der erste Eingangsanschluß (C1) mit dem Ausgangsanschluß der ersten Regelschleife (70) verbunden ist und wobei der zweite Eingangsanschluß (C2) mit dem Ausgangsanschluß der zweiten Regelschleife (71) verbunden ist, und
- eine Steuerschaltung für den Umschalter (59) einschließlich einer bistabilen Schaltung (53), deren Zustand 1 oder 0 bestimmt wird durch die Ausgangssignale von Vergleichern (52, 54, 55), denen einerseits die die Werte des Stromes der Kathode und der Luminanz darstellenden Signale zugeführt werden und andererseits Werte für vorgegebene Schwellen (Ic, Ik1, LUM1, LUM2).

3. Vorrichtung nach Anspruch 1 oder 2, dadurch gekennzeichnet, daß das von einer der Steuerschleifen stammende Signal an die Wehnelt-Elektrode der Röhre über eine Substrahierschaltung (62) angelegt wird, welcher das Videosignal (VDO) zugeführt wird.

4. Vorrichtung nach Anspruch 3, dadurch gekennzeichnet, daß eine Anordnung vorgesehen ist, um der Substrahierschaltung Polarisationssignale vorgegebenen Wertes (SEL, SOP, SRE) anstelle des Videosignals (VDO) zuzuführen.

5. Vorrichtung nach Anspruch 4, dadurch gekennzeichnet, daß die Anordnung zur Zuführung dieser Polarisationssignale aufweist:
- eine Widerstands-Spannungsteilerschaltung (R10, R11, R12)
- eine Umschaltschaltung (65), deren Eingangsanschlüsse (1, 2, 3, 4) mit der Widerstands-Spannungsteilerschaltung verbunden sind und mit einer Schaltung, welche das Videosignal (VDO) liefert, wobei der Ausgangsanschluß mit einem der Eingangsanschlüsse des Substrahierkreises (62) verbunden ist,
- eine logische Steuerschaltung (64) für die Umschaltschaltung.

6. Vorrichtung nach Anspruch 2, 3, 4 oder 5, dadurch gekennzeichnet, daß die bistabile Schaltung (53) auch durch ein Startsignal (ST) dergestalt gesteuert wird, daß die bistabile Schaltung (53) in einen derartigen Zustand (Zustand 0) übergeht, daß die erste Regelschleife (70) in Abhängigkeit vom Kathodenstrom (Ik) betriebsbereit ist.

7. Vorrichtung nach einem der vorgehenden Ansprüche 2 bis 6, dadurch gekennzeichnet, daß die bistabile Schaltung (53) durch die Ausgangssignale von Vergleichern (54, 55) gesteuert wird, welchen die Schwellwertspannungen (LUM1, LUM2) derart zugeführt werden, daß die bistabile Schaltung (53) in einen derartigen Zustand (Zustand 1) übergeht, daß die zweite Steuerschleife (71) in Abhängigkeit von der Luminanzmessung betriebsbereit ist, sofern diese Messung zwischen den Schwellwertspannungen liegt.

8. Vorrichtung nach einem der vorhergehenden Ansprüche 2 bis 7, dadurch gekennzeichnet, daß die bistabile Schaltung (53) durch das Ausgangssignal eines dritten Vergleichers (52) gesteuert wird, dem eine Schwellwertspannung (Ik1) derart zugeführt wird, daß diese bistabile Schaltung (53) in einen derartigen Zustand übergeht (Zustand 0), daß die erste Steuerschleife (70) betriebsbereit ist in Abhängigkeit von der Messung des Kathodenstromes (Ik), wenn dieser Strom (Ik) die Schwelle (Ik1) überschreitet.
